# EUROPÄISCHE PATENTSCHRIFT

(11) **EP 3 360 912 B1**
(45) Veröffentlichungstag und Bekanntmachung des Hinweises auf die Patenterteilung: **03.07.2019**
(21) Anmeldenummer: 17155523.8
(22) Anmeldetag: 10.02.2017
(51) Int. Cl.: C08G 65/26, C08G 65/30, C08G 65/336, C08G 65/337

(54) **VERFAHREN ZUR HERSTELLUNG HYDROSILYLIERBARER POLYOXYALKYLENETHER**
METHOD FOR MANUFACTURE OF POLYOXYALKYLENE ETHERS THAT CAN BE HYDROSILYLATED
PROCÉDÉ DE FABRICATION D'ETHERS DE POLYOXYALKYLÈNE SUSCEPTIBLE D'ÊTRE HYDROSILYLÉS

(43) Veröffentlichungstag der Anmeldung: 15.08.2018
(73) Patentinhaber: Evonik Degussa GmbH, 45128 Essen (DE)
(72) Erfinder: LOBERT, Matthias, 45309 Essen (DE); ZELLMER, Volker, 46240 Bottrop (DE); BRÖSGEN, Anja, 45138 Essen (DE); REIBOLD, Thomas, 45701 Herten (DE)

(56) Entgegenhaltungen:
- WO-A1-2010/063531
- DE-C1- 4 138 166

## Beschreibung

Die Erfindung betrifft ein Verfahren zur Herstellung hydrosilylierbarer Polyoxyalkylenether. Ferner betrifft sie bestimmte Allylpolyoxyalkylenethergemische.

Polyether stellen wichtige industrielle Intermediate dar. So ist beispielsweise der Einsatz als Bestandteil von grenzflächenaktiven Molekülen wie Polyethersiloxanen zu nennen.

Polyethersiloxane sind im Stand der Technik schon lange bekannt und werden u.a. durch die Umsetzung eines SiH-funktionellen Polysiloxans mit einem oder mehreren ungesättigten Polyethern hergestellt. Bei dieser Übergangsmetall-katalysierten SiC-Verknüpfung (vorteilhaft eingesetzt werden beispielsweise Pt-Katalysatoren) dieser beiden Spezies werden hohe Anforderungen an die Qualität des zu hydrosilylierenden Polyethers hinsichtlich Reinheit und Reaktivität gestellt, um eine möglichst vollständige Umsetzung der SiH-Gruppen des Polysiloxans zu ermöglichen.

Insbesondere die Veretherung und die Aufbereitung der Polyether ist problembehaftet. So führt z. B. die langzeitige thermische Belastung im stark alkalischen Medium (beispielsweise in Gegenwart Natriummethylat oder NaOH) verfahrensbedingt zu einer Teilisomerisierung der Allylgruppe des Polyoxyalkylenethers zur Propenylgruppe. Die Propenylgruppen werden dann während der Neutralisation in größerem bis hin zum quantitativen Umfang abgebaut. Hierbei wird zudem Propionaldehyd als gesundheitsgefährdender und geruchsintensiver Stoff freigesetzt, der zudem die Reaktivität des Polyethers bei der Hydrosilylierungsreaktion negativ beeinflussen kann.

In diesem Kontext besteht immer Bedarf an Polyethern, die im Sinne der Hydrosilylierung nahezu vollständig umsetzbar sind, vorzugsweise zu > 99 mol-% SiH-Umsatz führen, und an Verfahren zur Herstellung der selbigen, um eine stabile Synthese von diversen Folgeprodukten von konstant guter Qualität zu ermöglichen, insbesondere solcher ohne terminale OH-Gruppen.

Aufgabe der vorliegenden Erfindung war es, die Bereitstellung solcher Polyether zu ermöglichen.

Diese Aufgabe wird vom Gegenstand der vorliegenden Erfindung gelöst.

Gegenstand der vorliegenden Erfindung ist ein Verfahren zur Herstellung hydrosilylierbarer Polyoxyalkylenether, umfassend die Schritte
1. Alkoxylierung mindestens eines terminal ungesättigten Alkohols mit Alkylenoxiden zu einem Polyoxyalkylenether,
2. Veretherung des Polyoxyalkylenethers aus Schritt (1) und
3. Neutralisation des Produktes aus Schritt (2) unter gepufferten Bedingungen.

Schritt (1) des erfindungsgemäßen Verfahrens, die Alkoxylierung ungesättigter Alkohole, ist im Stand der Technik hinlänglich bekannt und kann nach beliebigen bekannten Verfahren durchgeführt werden, wie in der Literatur beschrieben. Als beispielhafte Literatur sei auf die Monographie, Alkylene Oxides and their polymers, F. E. Bailey, Taylor & Francis Inc., 1991 und *Ullmann's Encyclopedia of Industrial Chemistry* verwiesen.

Die Alkoxylierung von OH-funktionellen Startverbindungen kann sowohl unter Basen-, Säuren- oder Übergangsmetall-Katalyse erfolgen. Bevorzugt wird Verfahrensschritt (1) unter Basenkatalyse durchgeführt, was einer bevorzugten Ausführungsform der vorliegenden Erfindung entspricht.

Schritt (1) umfasst auch den Einsatz von Mischungen terminal ungesättigter Alkohole mit gesättigten Alkoholen.

Auch Schritt (2) des erfindungsgemäßen Verfahrens, die Veretherung von Polyoxyalkylenethern ist aus dem Stand der Technik hinlänglich bekannt. Man bedient sich vorzugsweise dem Prinzip der Synthese von Williamson aus Alkalimetallalkoholat und Alkylchloriden (Methoden der organischen Chemie, Houben-Weyl, Bd. VI/3, Auflage 1965).

Als beispielhafte Patentliteratur, die auf den Veretherungsschritt von Polyoxyalkylenethern mit Alkylhalogeniden näher eingeht, seien DE 4138166 C1, JP 2007204701 A, EP 1889865 A1 sowie EP 1685896 A1 genannt. Die erstgenannten Schriften beschreiben außerdem die Aufarbeitung des Produktes nach der Veretherung mittels Zugabe von Säuren bzw. verdünnter Säure, gefolgt von destillativer Entfernung des Wassers und Filtration von Salzen.

Das vorliegende erfindungsgemäße Verfahren weicht von dieser Lehre entscheidend ab, indem eine Neutralisation unter gepufferten Bedingungen durchgeführt wird. Vorzugsweise wird in dem erfindungsgemäßen Schritt (3) das Produkt aus Schritt (2) vor der Säurezugabe mit einer Pufferlösung, insbesondere wässrigen Pufferlösung, versetzt.

Solches Vorgehen ermöglicht, die Propenylgruppen des veretherten Polyoxyalkylenethers zu erhalten.

Im Folgenden sollen bevorzugte Ausgestaltungen des erfindungsgemäßen Verfahrens noch genauer beschrieben werden.

Im Verfahrensschritt (1) des erfindungsgemäßen Verfahrens können als Starter für die Alkoxylierungsreaktion prinzipiell alle hydroxyfunktionellen, aliphatischen ungesättigten Verbindungen eingesetzt werden. Bevorzugt können als Starter für die Alkoxylierungsreaktion mono-hydroxyfunktionelle, aliphatische terminal ungesättigte Verbindungen eingesetzt werden. Weiter bevorzugt können als Starter für die Alkoxylierungsreaktion mono-hydroxyfunktionelle, aliphatische terminal ungesättigte Verbindungen eingesetzt werden. Besonders bevorzugt können Allylalkohol, 2-Allyloxyethanol, 5-Hexen-1-ol und 10-Undecen-1-ol eingesetzt werden. Insbesondere bevorzugt kann Allylalkohol eingesetzt werden. Eingesetzt werden können auch die entsprechenden Methallyl-Verbindungen, wie z. B. Methallylalkohol oder Methallylpolyalkylenoxide. Wenn im Rahmen dieser Erfindung von allylischen Startverbindungen gesprochen wird, umfasst dieser Begriff auch die methallylischen Analoga, ohne dass dies gesondert angesprochen werden müsste. Wird der Begriff "(meth)allylisch" verwendet, so umfasst dieser ebenfalls "allylisch" wie auch "methallylisch".

Als Alkylenoxide können generell alle dem Fachmann bekannten Alkylenoxide, rein oder in beliebigen Mischungen, eingesetzt werden. Bevorzugt können Ethylenoxid, Propylenoxid, 1,2-Butylenoxid, 2,3-Butylenoxid, Isobutylenoxid, Octen-1-oxid, Decen-1-oxid, Dodecen-1-oxid, Tetradecen-1-oxid, Hexadecen-1-oxid, Octadecen-1-oxid, C20/28-Epoxid, α-Pinenepoxid, Cyclohexenoxid, 3-Perfluoroalkyl-1,2-Epoxypropan und Styroloxid eingesetzt werden. Besonders bevorzugt werden Ethylenoxid, Propylenoxid, Dodecen-1-oxid und Styroloxid eingesetzt. Ganz besonders bevorzugt werden Ethylenoxid und/oder Propylenoxid eingesetzt.

Die betreffenden Alkylenoxide können nach erfolgter Umsetzung zu den in Formeln (1a) und (1b) definierten Fragmenten mit dem Index a führen. Die Formeln (1a) und (1b) sind weiter unten angegeben.

Als Glycidylether können Alkyl-, Aryl-, Alkaryl- oder Alkoxy-substituierte Glycidylether eingesetzt werden. Der Ausdruck "Alkyl" steht hier vorzugsweise für lineare oder verzweigte Alkyl- oder Alkenyl-Reste mit 1 bis 30, vorzugweise 1 bis 12 und bevorzugt 2 bis 8 Kohlenstoffatomen. Besonders bevorzugt steht der Ausdruck "Alkyl" für einen Methyl-, Ethyl-, Propyl-, Butyl-, tert-Butyl-, 2-Ethylhexyl-, Allyl- oder einen C₁₂-C₁₄-Rest. Der Ausdruck "Aryl" steht vorzugsweise für einen Phenylrest (Phenylglycidylether) und der Ausdruck "Alkaryl" steht vorzugsweise für einen o-Kresyl-, p-tert-Butyl-Phenyl oder Benzyl-Rest (o-Kresylglycidylether, p-tert-Butyl-Phenylglycidylether oder Benzylglycidylether). Der Ausdruck "Alkoxy" steht vorzugsweise für Methoxy, Ethoxy, Propoxy, Butoxy und/oder Phenylethoxy und umfasst von 1 bis 30 Alkoxy-Einheiten, die auch eine Kombination von zwei oder mehr unterschiedlichen Alkoxy-Einheiten sein kann. Als Glycidylether können auch polyfunktionelle Glycidylether wie 1,4-Butandioldiglycidylether, 1,6-Hexandioldiglycidylether, Cyclohexandimethanoldiglycidylether, Neopentylglykoldiglycidylether, Polyethylenglykoldiglycidylether, Polypropylenglykoldiglycidyl-ether, Polyglycerin-3-Glycidether, Glycerintriglycidether, Trimethylolpropantriglycidylether oder Pentraerythrittetraglycidylether eingesetzt werden. Der Einsatz derartiger tri- oder tetra-funktioneller Monomere führt zum Aufbau verzweigter Strukturelemente. Die betreffenden Glycidylether können nach erfolgter Umsetzung zu den in Formeln (1a) und (1b) definierten Fragmenten mit dem Index b führen. Die Formeln (1a) und (1b) sind weiter unten angegeben.

Im Folgenden werden weitere bevorzugte Ausgestaltungen des Verfahrensschrittes (1) beschrieben:
Die Umsetzung erfolgt in dem erfindungsgemäßen Verfahren in Schritt (1) vorzugsweise so, dass zunächst der Starter durch Alkalimetallhydroxid oder-alkoxid, vorzugsweise Natriumhydroxid und/oder Kaliumhydroxid bzw. Natriummethylat und/oder Kaliummethylat, zumindest teilweise deprotoniert wird. Die eingesetzte Menge an Alkalimetallhydroxiden oder -alkoxiden beträgt vorzugsweise von 1 bis 40 mol-%, bevorzugt und 3 bis 15 mol-%, bezogen auf die Mole OH des Starters .

Die Alkalimetallhydroxide und/oder -alkoxide können in fester oder gelöster Form (beispielsweise gelöst in Wasser oder niederen Alkoholen) dem Reaktionsgefäß zugeführt werden. Der Spaltalkohol und/oder ggf. anwesendes Lösemittel kann vor Beginn der eigentlichen Alkoxylierung destillativ entfernt werden.

Die so erhaltene Mischung, die je nach verwendetem Starter vorzugsweise Alkohole und Alkoholate enthält, wird mit zur ringöffnenden Polymerisation geeigneten Edukten, vorzugsweise Alkylenoxiden vorzugsweise bei einer Temperatur zwischen vorzugsweise 60°C und 200°C, bevorzugt von 90°C bis 170°C und besonders bevorzugt von 100 bis 130°C umgesetzt. Die Umsetzung erfolgt vorzugsweise bei Drücken im Bereich von 0,001 bis 100 bar, bevorzugt im Bereich von 0,005 bis 10 bar und ganz besonders bevorzugt von 0,01 bis 5 bar (jeweils absolute Drücke).

Nach der Umsetzung der zur ringöffnenden Polymerisation geeignete Edukte, vorzugsweise des Alkylenoxids, in Verfahrensschritt (1) kann sich gegebenenfalls ein Desodorierungsschritt anschließen, um Spuren von nicht umgesetzten zur ringöffnenden Polymerisation geeigneten Edukten, vorzugsweise Alkylenoxiden zu entfernen, sowie eventuell gebildeten Nebenprodukten. Bei einem solchen Desodorierungsschritt wird der Reaktor bevorzugt bei der Temperatur des Verfahrensschrittes (1), bevorzugt bis zu einem Vakuum von kleiner-gleich 100 mbar, besonders bevorzugt bis zu einem Vakuum von kleiner-gleich 60 mbar und besonders bevorzugt bis zu einem Vakuum von kleiner-gleich 30 mbar evakuiert.

Alternativ kann die Desodorierung auch nach beliebigen Verfahren der Technik, beispielsweise durch das Einleiten von Strip-Gas erfolgen.

Im Folgenden werden bevorzugte Ausgestaltungen des Verfahrensschrittes 2 beschrieben:
Im Verfahrensschritt (2) des erfindungsgemäßen Verfahrens findet der Veretherungsschritt des Polyoxyalkylenethers aus Schritt (1) statt, wobei bevorzugt aliphatische ggf. ungesättigte Alkylhalogenide als Alkylierungsreagenzien eingesetzt werden. Bevorzugt eingesetzt werden können Alkylchloride, Alkylbromide oder auch ungesättigte Verbindungen wie Allylchloride oder Allylbromide. Ganz besonders bevorzugt können Alkylchloride wie Methylchlorid oder Butylchlorid eingesetzt werden, ganz besonders bevorzugt Methylchlorid.

Im Verfahrensschritt (2) des erfindungsgemäßen Verfahrens wird das aus Schritt (1) erhaltene Produkt entsprechend dem Stand der Technik vorzugsweise zunächst mit überschüssigem Alkalialkoholat und/oder Alkalihydroxid versetzt, um die terminalen OH-Gruppen des Produkts quantitativ in die Hydroxylionen (Polyetheralkoholat) zu überführen.

Die Alkalimetallhydroxide und/oder -alkoxide können in fester oder gelöster Form (beispielsweise gelöst in Wasser oder niederen Alkoholen) dem Reaktionsgefäß zugeführt werden.

Bevorzugt werden Natriummethylat oder Natriumhydroxid verwendet, um die terminalen OH-Gruppen des Produkts quantitativ in die Hydroxylionen (Polyetheralkoholat) zu überführen.

Die Bezeichnung "überschüssiges" Natriummethylat oder Natriumhydroxid bezieht sich auf das Molverhältnis der Base in Bezug auf das gebildete Polyetheralkoholat.

Die Umsetzung wird insbesondere bei Temperaturen von 70°C bis 150°C, bevorzugt 100 bis 130°C durchgeführt, wobei im Reaktionsverlauf Alkohol (z. B. bei Verwendung der Methylate, Methanol) beziehungsweise Wasser (z. B. bei Verwendung der Hydroxide) freigesetzt werden, die im Vakuum abgezogen werden können. Bei angelegtem Vakuum sinkt mit fortschreitender Reaktion der Druck. Bei Erreichen eines Druckes von vorzugsweise kleiner 20 mbar wird die Reaktion abgebrochen. Man setzt nun vorteilhafterweise eine überschüssige Menge Alkylchlorid zu und führt die Veretherung durch. Bei Verwendung von Methylchlorid stellt sich dabei ein Druck vorzugsweise im Bereich von 200 bis 1300 mbar ein.

Ggf. kann zur Erzielung größerer Veretherungsgrade das im vorigen Abschnitt beschriebene Vorgehen, bestehend aus Destillations- und Alkylierungsschritt, wiederholt werden.

Insbesondere wird ein quantitativer Veretherungsgrad (> 99%) angestrebt und ist mit dem erfindungsgemäßen Verfahren auch zugänglich. Bevorzugt sind aber zumindest 90% der terminalen Gruppen nicht -OH, sondern -OR⁴, mit R⁴ unabhängig voneinander eine Alkylgruppe mit 1 bis 8 Kohlenstoffatomen, die ggf. verzweigt sein kann, und/oder eine ungesättigte aliphatische Gruppe.

Mit Blick auf die bevorzugte Ausgestaltung des Verfahrensschrittes (2) sei insbesondere auf die Offenbarung der EP 1685896 A1 sowie auf die bevorzugte Einsetzbarkeit eines Schlaufenreaktors verwiesen.

Im Folgenden werden bevorzugte Ausgestaltungen des Verfahrensschrittes (3) beschrieben:
Im Verfahrensschritt (3) des erfindungsgemäßen Verfahrens wird das aus Schritt (2) erhaltene Produkt unter gepufferter Bedingungen neutralisiert.

Das Produkt aus Schritt (2) kann vor der gepufferten Neutralisation zunächst mit Wasser verdünnt werden, was einer bevorzugten Ausführungsform der Erfindung entspricht, oder auch direkt durch den Zusatz einer Pufferlösung, vorzugsweise wässrigen Pufferlösung, gefolgt von einer Menge Säure neutralisiert werden, was ebenfalls einer bevorzugten Ausführungsform der Erfindung entspricht. Darüber hinaus kann in einer weiteren bevorzugten Ausführungsform des Verfahrens nach dem Zusatz von Wasser vor der gepufferten Neutralisation auch die wässrige Phase abgetrennt werden.

Als Puffersysteme sind generell sowohl anorganische als auch organische Puffersysteme einsetzbar. Bevorzugt werden anorganische Puffersysteme eingesetzt.

Es werden bevorzugt wässrige Pufferlösungen eingesetzt. Der Pufferbereich der verwendeten Pufferlösungen ist in breiten Grenzen wählbar. Beispiele für vorteilhaft einsetzbare Pufferlösungen und deren pH-Bereiche sind beispielsweise Kohlensäure-Carbonat-Puffer (Pufferbereich: pH 6,2 bis 8,6; neutral), Kohlensäure-Silikat-Puffer (pH 5,0 bis 6,2), Essigsäure/Acetat-Puffer (pH 3,7 bis 5,7) Phosphatpuffer (pH 5,4 bis 7,8), MES (2-(*N*-Morpholino)ethansulfonsäure) (pH 5,2 bis 6,7).

Die im erfindungsgemäßen Verfahren vorteilhaft einsetzbare Pufferlösung kann einen Pufferbereich zwischen pH 3,5 und 9,0 aufweisen, besonders bevorzugt weist Sie einen Pufferbereich zwischen pH 4,5 und 8,5, insbesondere bevorzugt einen Pufferbereich zwischen pH 5,0 und 8,0 auf. Vorteilhafterweise umfasst die Pufferlösung als Puffersubstanz Phosphat, vorzugsweise in Form von Hydrogenphosphat und/oder Dihydrogenphosphat.

Insbesondere kann das Produkt aus Schritt (2) vor der Neutralisation mit einer hinreichenden Menge Natriumdihydrogenphosphatlösung versetzt werden.

Die Konzentration der Pufferlösung, wie insbesondere der Natriumdihydrogenphosphatlösung, ist vom Anwender für den konkreten Fall frei wählbar. Bevorzugt beträgt die Konzentration der Pufferlösung, vorzugsweise Natriumdihydrogenphosphatlösung, zwischen 1 und 46 Gew.-%, besonders bevorzugt 15 bis 40 Gew.-%, insbesondere bevorzugt zwischen 25-35 Gew.-%.

Die optimale Menge an verwendeter Pufferlösung ist dem jeweiligen Anwendungsfall anzupassen und in weiten Grenzen wählbar. In jedem Fall ist die Mindestmenge so zu bemessen, dass eine ausreichende puffernde Wirkung in dem jeweiligen zu neutralisierenden Reaktionsgemisch erwirkt wird. Der Fachmann kann das anhand weniger Handversuche rasch ermitteln.

Bevorzugt wird die Pufferlösung in Mengen von 0,5 bis 100 Gew.-Teilen eingesetzt, besonders bevorzugt in Mengen von 1 bis 50 Gew.-Teilen und insbesondere in Mengen von 2 bis 20 Gew.-Teilen, jeweils bezogen auf 100 Gew.-Teile des aus Schritt (2) erhaltenen Produktes. Prinzipiell ist es auch möglich größere Mengen als 100 Gew.-Teile Pufferlösung einzusetzen, aus Gründen der Unwirtschaftlichkeit jedoch weniger bevorzugt.

Die Neutralisation kann durch den Zusatz jeglicher Säure erfolgen. Bevorzugt können anorganische Säuren wie Mineralsäuren eingesetzt werden. Besonders bevorzugt können Salzsäure, Schwefelsäure oder Phosphorsäure eingesetzt werden, insbesondere Phosphorsäure.

Die Menge der zugesetzten Säure ist insbesondere dergestalt anzupassen, dass das Gemisch in Verfahrensschritt (3) auf einen pH-Wert von 4 bis 7 eingestellt wird bevor Wasser und Salze entfernt werden. Besonders bevorzugt wird der pH-Wert auf 4,5 bis 6 eingestellt.

Abschließend können Wasser und Salze nach beliebigen Verfahren der Technik entfernt werden. Vorzugsweise wird zunächst das Wasser destillativ im Vakuum entfernt und anschließend die ausgefallenen Salze mittels Filtration quantitativ entfernt.

Die nach dem erfindungsgemäßen Verfahren hergestellten Polyether zeichnen sich dadurch durch eine sehr gute Reaktivität im Sinne der Hydrosilylierung aus, die sogar einem Propenylgruppen freien Polyether überlegen ist. Darüber hinaus führt der Erhalt der Propenylgruppe zur Vermeidung der Freisetzung von Propionaldehyd, was zu ökotoxikologischen Vorteilen führt und die Herstellung eines geruchlich vorteilhafteren Produkts ermöglicht.

Die Produkte ergeben bei einer Umsetzung mit einem Wasserstoffpolysiloxan in Gegenwart geeigneter Übergangsmetallkatalysatoren (beispielsweise Platinkatalysatoren) Ausbeuten von >99% und gestatten die Herstellung hochwirksamer grenzflächenaktiver Substanzen.

Es entspricht einer bevorzugten Ausführungsform der Erfindung, wenn das erfindungsgemäße Verfahren zur Herstellung von Gemischen hydrosilylierbarer Polyoxyalkylenether, insbesondere umfassend hydrosilylierbare propylengruppenhaltige Polyoxyalkylenether eingesetzt wird.

Bei der Alkoxylierung eines terminal ungesättigten Alkohols und/oder der anschließenden Veretherungsreaktion findet (wie eingangs ausgeführt) immer eine anteilige Umlagerung der Doppelbindung von der terminalen (*α*-Position) in die thermodynamisch stabilere interne (*β-*Position) statt, so dass sich verfahrensimmanent stets Polyethergemische bilden.

Ein erfindungsgemäßes Verfahren zur Herstellung hydrosilylierbarer Polyoxyalkylenether-Gemische, umfassend Verbindungen der allgemeinen Formeln (1a) und (1b), 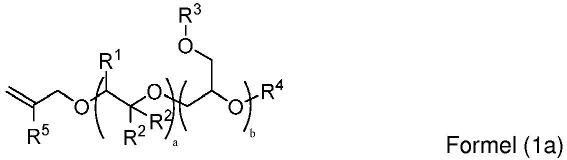 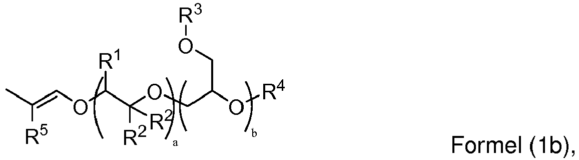 mit
- R¹ =: unabhängig voneinander ein Wasserstoffradikal oder eine Alkylgruppe mit 1 bis 8 Kohlenstoffatomen, bevorzugt Wasserstoff, Methyl- oder Ethyl-, insbesondere bevorzugt Wasserstoff,
- R² =: unabhängig voneinander ein Wasserstoffradikal, eine Alkylgruppe mit 1 bis 20 Kohlenstoffatomen, eine Aryl- oder Alkarylgruppe, bevorzugt Wasserstoff, Methyl-, Ethyl-, Octyl-, Decyl-, Dodecyl-, Phenyl-, Benzyl-, besonders bevorzugt Wasserstoff, Methyl- oder Ethyl-, oder
- R¹: und einer der Reste R² können gemeinsam einen Ring bilden, der die Atome, an die R¹ und R² gebunden sind, einschließt, bevorzugt enthält dieser Ring 5 bis 8 Kohlenstoffatome,
- R³ =: unabhängig voneinander ein gesättigter oder ungesättigter, aliphatischer oder aromatischer Kohlenwasserstoffrest mit 2 bis 30 C-Atomen, insbesondere bis 24 C-Atomen, der gegebenenfalls weiter substituiert ist,
- R⁴ =: unabhängig voneinander ein Wasserstoffradikal, eine Alkylgruppe mit 1 bis 8 Kohlenstoffatomen, die ggf. verzweigt sein kann, und/oder eine ungesättigte aliphatische Gruppe, bevorzugt zu < 10% Wasserstoffradikal, z.B. 0,1 bis < 10% Wasserstoffradikal, %-Angabe bezogen auf die Gesamtzahl aller betreffenden Moleküle, die den Rest R⁴ enthalten,
- R⁵ =: Wasserstoff oder Methyl-Gruppe,
wobei
- a =: 1 bis 1000, bevorzugt 2 bis 500, besonders bevorzugt 3 bis 500, weiter bevorzugt größer 3 bis 100, insbesondere bevorzugt 4 bis 50,
- b =: 0 bis 1000, bevorzugt 1 bis 500, weiter bevorzugt größer 1 bis 200, insbesondere bevorzugt 0,
mit der Maßgabe, dass die Summe aus a + b größer gleich 3 sein muss und
mit der Maßgabe, dass die Gruppen mit den Indices a + b frei permutierbar über die Molekülkette sind,
und mit der Maßgabe, dass die verschiedenen Monomereinheiten sowohl der Fragmente mit den Indices a als auch b untereinander blockweise aufgebaut sein können, wobei einzelne Blöcke auch mehrfach vorkommen können und untereinander statistisch verteilt sein können, oder aber einer statistischen Verteilung unterliegen und zudem untereinander frei permutierbar, im Sinne von in beliebiger Reihenfolge anzuordnen sind,
entspricht einer weiteren bevorzugten Ausführungsform.

Ein weiterer Gegenstand der Erfindung sind hydrosilylierbare Polyoxyalkylenether-Gemische, umfassend Verbindungen der allgemeinen Formeln (1a) und (1b), 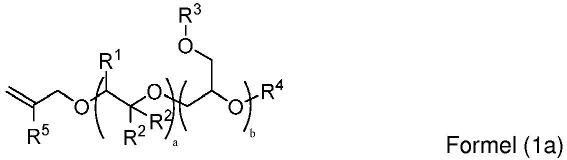 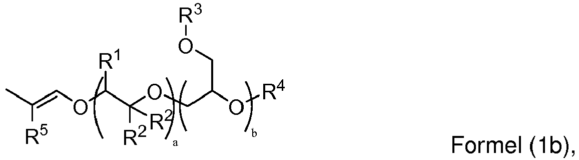 mit
- R¹ =: unabhängig voneinander ein Wasserstoffradikal oder eine Alkylgruppe mit 1 bis 8 Kohlenstoffatomen, bevorzugt Wasserstoff, Methyl- oder Ethyl-, insbesondere bevorzugt Wasserstoff,
- R² =: unabhängig voneinander ein Wasserstoffradikal, eine Alkylgruppe mit 1 bis 20 Kohlenstoffatomen, eine Aryl- oder Alkarylgruppe, bevorzugt Wasserstoff, Methyl-, Ethyl-, Octyl-, Decyl-, Dodecyl-, Phenyl-, Benzyl-, besonders bevorzugt Wasserstoff, Methyl- oder Ethyl-, oder
- R¹: und einer der Reste R² können gemeinsam einen Ring bilden, der die Atome, an die R¹ und R² gebunden sind, einschließt, bevorzugt enthält dieser Ring 5 bis 8 Kohlenstoffatome,
- R³ =: unabhängig voneinander ein gesättigter oder ungesättigter, aliphatischer oder aromatischer Kohlenwasserstoffrest mit 2 bis 30 C-Atomen, insbesondere bis 24 C-Atomen, der gegebenenfalls weiter substituiert ist,
- R⁴ =: unabhängig voneinander ein Wasserstoffradikal, eine Alkylgruppe mit 1 bis 8 Kohlenstoffatomen, die ggf. verzweigt sein kann, und/oder eine ungesättigte aliphatische Gruppe, bevorzugt zu < 10% Wasserstoffradikal, z.B. 0,1 bis < 10% Wasserstoffradikal, %-Angabe bezogen auf die Gesamtzahl aller betreffenden Moleküle, die den Rest R⁴ enthalten,
- R⁵ =: Wasserstoff oder Methyl-Gruppe,
wobei
- a =: 1 bis 1000, bevorzugt 2 bis 500, besonders bevorzugt 3 bis 500, weiter bevorzugt größer 3 bis 100, insbesondere bevorzugt 4 bis 50,
- b =: 0 bis 1000, bevorzugt 1 bis 500, weiter bevorzugt größer 1 bis 200, insbesondere bevorzugt 0,
mit der Maßgabe, dass die Summe aus a + b größer gleich 3 sein muss und
mit der Maßgabe, dass die Gruppen mit den Indices a + b frei permutierbar über die Molekülkette sind,
und mit der Maßgabe, dass die verschiedenen Monomereinheiten sowohl der Fragmente mit den Indices a als auch b untereinander blockweise aufgebaut sein können, wobei einzelne Blöcke auch mehrfach vorkommen können und untereinander statistisch verteilt sein können, oder aber einer statistischen Verteilung unterliegen und zudem untereinander frei permutierbar, im Sinne von in beliebiger Reihenfolge anzuordnen sind.

Diese sind insbesondere erhältlich über ein Verfahren wie zuvor beschrieben.

Ein weiterer Gegenstand der Erfindung sind Polyethersiloxane enthaltend hydrosilylierbare Polyoxyalkylenether-Gemische, wie zuvor beschrieben.

Ein weiterer Gegenstand der Erfindung ist die Verwendung der vorgenannten Polyethersiloxane als grenzflächenaktive Substanz.

Ein weiterer Gegenstand der Erfindung ist die Verwendung der vorgenannten Polyethersiloxane als Additiv für keramische Formulierungen, als Additiv in Beschichtungsmitteln, polymeren Formmassen oder Thermoplasten, als Nahrungsmittelzusatz, als Netzmittel, als Substratnetzmittel, als Vernetzer, als Vernetzer, als Verdicker, als Additiv für Polyurethanverbindungen, bei der Herstellung von Farben, Klebstoffen, als Träger von Katalysatoren oder in der biomedizinischen Technik allgemein, oder als Zusatzstoff für kosmetische Formulierungen und Reinigungsmittel.

Ein weiterer Gegenstand der Erfindung ist die Verwendung von Zusammensetzungen enthaltend vorgenannte Polyethersiloxane, als Additiv für keramische Formulierungen, als Additiv in Beschichtungsmitteln, polymeren Formmassen oder Thermoplasten, als Nahrungsmittelzusatz, als Netzmittel, als Substratnetzmittel, als Vernetzer, als Verdicker, als Additiv für Polyurethanverbindungen, bei der Herstellung von Farben, Klebstoffen, als Träger von Katalysatoren oder in der biomedizinischen Technik allgemein, oder als Zusatzstoff für kosmetische Formulierungen und Reinigungsmittel.

Die erfindungsgemäßen Gegenstände wurden beispielhaft beschrieben, ohne dass die Erfindung auf diese beispielhaften Ausführungsformen beschränkt sein soll. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar. Bei Prozentangaben handelt es sich, wenn nicht anders angegeben, um Angaben in Gewichtsprozent. Sind nachfolgend Messwerte angegeben, so sind diese Messungen, wenn nicht anders angegeben bei Normalbedingungen (25 °C und 1013 mbar) durchgeführt worden. Werden Mittelwerte angegeben, so handelt es sich, wenn nicht anderes angegeben, um Gewichtsmittel.

### Experimenteller Teil

### Messmethoden:

Zur Bestimmung von Parametern oder Messwerten werden vorzugsweise die nachfolgend beschriebenen Methoden verwendet. Insbesondere wurden diese Methoden in den Beispielen des vorliegenden Schutzrechts verwendet.

Der Propenylgehalt der Polyether bzw. Polyethergemische kann mittels ¹H-NMR nachgewiesen werden. Hierbei wird das Signal (Duplett) bei einer Verschiebung von (x) = 1,5 ppm (entspricht der CH3-Gruppe der Propenyleinheit) mit dem Signal (Duplett von Duplett) bei (y) = 5,1-5,4 ppm (entspricht dem Signal der CH2-Gruppe der Allyleinheit) gewichtet auf die Anzahl der Protonen ins Verhältnis gesetzt.

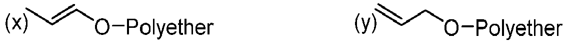

Die NMR-Spektren wurden mit einem 400 MHz Spektrometer der Firma Bruker unter Einsatz eines 5 mm QMP-Kopfes gemessen. Es wurden quantitative NMR-Spektren in Gegenwart eines geeigneten Beschleunigungsagenzes gemessen. Die zu untersuchende Probe wurde in einem geeigneten deuterierten Lösungsmittel (Methanol) gelöst und in 5 mm oder ggf. 10 mm NMR-Röhrchen überführt.

Gewichtsmittlere und zahlenmittlere Molekulargewichte werden im Rahmen dieser Erfindung für die hergestellten Polyether kalibriert gegen einen Polypropylenglykolstandard durch Gelpermeationschromatographie (GPC) bestimmt. Die GPC wurde durchgeführt auf einem Agilent® 1100 ausgestattet mit einem RI-Detektor und einer SDV 1000/10000 Ä Säulenkombination bestehend aus einer 0,8 cm x 5 cm Vorsäule und zwei 0,8 cm x 30 cm Hauptsäulen bei einer Temperatur von 30°C und einer Fließrate von 1 mL/min (mobile Phase: THF). Die Probenkonzentration betrug 10 g/L und das Injektionsvolumen 20 µL.

Die nasschemische Analytik wurde in Anlehnung an internationale Standardmethoden durchgeführt: lodzahl (IZ; DGF C-V 11 a (53); Säurezahl (SZ; DGF C-V 2); OH-Zahl (ASTM D 4274 C).

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiel 1: Erfindungsgemäßes Beispiel

### 1.1 Alkoxylierung gemäß Verfahrensschritt (1) des erfindunasaemäßen Verfahrens

In einem 5 Liter Autoklaven wurden 337 g Allylalkohol und 11 g Natriummethylat unter Stickstoff vorgelegt und bis auf einen Innendruck von 30 mbar evakuiert. Unter Rühren wurde das Reaktionsgemisch auf 120°C aufgeheizt und bei dieser Temperatur wurden 2652 g Ethylenoxid (EO) angelagert. Nach quantitativem Umsatz des EO wurde der Reaktorinhalt durch Evakuierung auf 30 mbar desodoriert, um eventuell vorhandene Spuren von nicht umgesetztem EO zu entfernen. Die Analysenwerte des Produkts aus Beispiel 1.1 sind Tabelle 1 zu entnehmen.

### 1.2 Veretherung gemäß Verfahrensschritt (2) des erfindunasaemäßen Verfahrens

In einen Rührreaktor mit Temperatur- und Drucküberwachung werden unter Stickstoff 1081 g des Produkts aus Beispiel 1.1 eingefüllt. Danach werden 96 g (115 Mol-%) Natriumhydroxidpulver zugegeben und das Gemisch unter Rühren auf 120°C erhitzt. Gleichzeitig wird der Reaktor evakuiert und Wasser abdestilliert, bis sich ein Druck von 20 mbar einstellt (ca. 2,5 h). Dann werden bei 120°C 108 g Methylchlorid so zudosiert, dass der Druck 1,0 bar nicht überschreitet (ca. 1 h). Im Folgenden wird der Reaktor auf ca. 20 mbar evakuiert. Bei der gleichen Temperatur werden innerhalb ca. 1 h 24 g Methylchlorid zudosiert. Nach einer Nachreaktionszeit von ca. 0,5 h wird das Produkt bei 95°C und 20 mbar entgast.

### 1.3 Gepufferte Aufarbeitung gemäß Verfahrensschritt (3) des erfindungsgemäßen Verfahrens

Das Produkt aus Beispiel 1.2 (1081 g) wird auf 100°C temperiert und 500 g Wasser werden zugegeben. Anschließend werden 12,1 g Natriumdihydrogenphosphatlösung (ca. 45%ig) zugegeben und 1 h gerührt. Nun wird langsam verdünnte Phosphorsäure (30%ig) zugegeben bis ein pH-Wert von 5 erreicht wird. Das Wasser wird bei 100°C und 10 mbar abdestilliert und das Produkt wird mittels Filtration von Salzresten befreit. Man erhält ein farbloses bis gelbliches Produkt, dessen physikalische Parameter in Tabelle 1 zusammengefasst sind. Die Analysenwerte vor/nach der Veretherung sind ebenfalls der Tabelle 1 zu entnehmen.

### Beispiel 2: Vergleichsbeispiel

Das Produkt aus Beispiel 1.1 wurde analog Beispiel 1.2 umgesetzt und wie folgt aufgearbeitet.

### 2.3 Unaepufferte Aufarbeitung

1184 g eines Produkts hergestellt analog Beispiel 1.2 werden auf 100°C temperiert und 550 g Wasser werden zugegeben. Nun wird langsam verdünnte Phosphorsäure (30%ig) zugegeben bis ein pH-Wert von 5 erreicht wird. Das Wasser wird bei 100°C und 10 mbar abdestilliert und das Produkt wird mittels Filtration von Salzresten befreit. Man erhält ein farbloses bis gelbliches Produkt, dessen physikalischen Parameter in Tabelle 1 zusammengefasst sind.

### Beispiel 3: Erfindungsgemäßes Beispiel

### 3.1 Alkoxylierung gemäß Verfahrensschritt (1) des erfindungsgemäßen Verfahrens

Die Alkoxylierung wurde analog Beispiel 1.1 durchgeführt, wobei an den Starter Allylalkohol ein Gemisch aus 42 wt-% EO und 58 wt-% PO angelagert wurde und so ein Polyether mit einem Molekulargewicht von ca. 1300 g/mol erhalten wurde. Man erhält ein farbloses bis gelbliches Produkt, dessen physikalischen Parameter in Tabelle 1 zusammengefasst sind.

### 3.2 Veretherung gemäß Verfahrensschritt (2) des erfindungsgemäßen Verfahrens

Die Veretherung des Polyethers aus Beispiel 3.1 wurde analog Beispiel 1.2 durchgeführt. Man erhält ein farbloses bis gelbliches Produkt, dessen physikalischen Parameter in Tabelle 1 zusammengefasst sind.

### 3.3 Gepufferte Aufarbeitung gemäß Verfahrensschritt (3) des erfindungsgemäßen Verfahrens

Die gepufferte Aufarbeitung des Polyethers aus Beispiel 3.2 wurde analog Beispiel 1.3 durchgeführt. Man erhält ein farbloses bis gelbliches Produkt, dessen physikalischen Parameter in Tabelle 1 zusammengefasst sind.

### Beispiel 4: Vergleichsbeispiel

Das Produkt aus Beispiel 3.1 wurde analog Beispiel 3.2 umgesetzt.

### 4.3 Ungepufferte Aufarbeitung

Die ungepufferte Aufarbeitung erfolgte analog Beispiel 2.3. Man erhält ein farbloses bis gelbliches Produkt, dessen physikalischen Parameter in Tabelle 1 zusammengefasst sind.

**Tabelle 1: Physikalische Daten der Beispiele 1-4**

| **Beispiel** | **Propenylgehalt** | **Iodzahl** | **OH-Zahl** | **Säurezahl** |
|---|---|---|---|---|
| | [mol-%] | [g lod/100 g] | [mg KOH/g] | [mg KOH/g] |
| 1.1 = 2.1 | 1,2 | 50,3 | 108 | -3,5 |
| 1.2 = 2.2 | 2,9 | n. b. | n. b. | n. b. |
| 1.3 | 2,9 | 46,5 | 6,5 | 0,2 |
| 2.3 | 0 | 45,5 | 7,5 | 0,2 |
| 3.1 = 4.1 | 1,4 | 18,0 | 43,0 | -4,1 |
| 3.2 = 4.2 | 4,3 | n. b. | n. b. | n. b. |
| 3.3 | 4,3 | 17,5 | 2,5 | 0,10 |
| 4.3 | 0 | 17,0 | 3,0 | 0,18 |

Die Reaktivität der Propenylgruppen-haltigen Polyether im Sinne einer SiC-Verknüpfung wurde anhand der Pt-katalysierten Hydrosilylierung der nach dem erfindungsgemäßen Verfahren hergestellten Polyether an Heptamethyltrisiloxan (HMTS; CAS Nummer: 1873-88-7) überprüft.

### Beispiel 5: Hydrosilylierung des Polyethers aus Beispiel 1.3 an HMTS

In einem 1 L-Dreihalskolben mit Thermometer, Rückflußkühler und KPG-Rüher wurden 435,1 g des Polyethers aus Beispiel 1.3 auf 75°C erwärmt und bei dieser Temperatur mit 74 mg einer Lösung des Karstedt-Katalysators (CAS Nummer: 68478-92-2) in Toluol (1,5 % Pt) versetzt. Nun wurden 120 g HMTS (SiH-Wert = 5,11 val/kg) so zugetropft, dass die Temperatur nicht über 90°C stieg. Nach beendeter HMTS-Zugabe wurde die Mischung bei 90 °C so lange gerührt bis der SiH-Umsatz nahezu quantitativ war (> 99%). Der Umsatz wurde durch gasvolumetrische Bestimmung des SiH-Wertes der Reaktionsmischung bestimmt (Zersetzung einer eingewogenen Probe an der Gasbürette mit Hilfe einer Natriumbutylat-Lösung). Der Umsatzverlauf ist in Tabelle 2 zusammengefasst. Man erhielt eine gelblich, klare Flüssigkeit als Produkt.

### Beispiel 6: Hydrosilylierung des Polyethers aus Beispiel 2.3 an HMTS

In einem 1 L-Dreihalskolben mit Thermometer, Rückflußkühler und KPG-Rüher wurden 454,1 g des Polyethers aus Beispiel 2.3 auf 75°C erwärmt und bei dieser Temperatur mit 77 mg einer Lösung des Karstedt-Katalysators (CAS Nummer: 68478-92-2) in Toluol (1,5 % Pt) versetzt. Nun wurden 125 g HMTS (SiH-Wert = 5,01 val/kg) so zugetropft, dass die Temperatur nicht über 90°C stieg. Nach beendeter HMTS-Zugabe wurde die Mischung bei 90 °C so lange gerührt bis der SiH-Umsatz nahezu quantitativ war (> 99%).

Der Umsatz wurde durch gasvolumetrische Bestimmung des SiH-Wertes der Reaktionsmischung bestimmt (Zersetzung einer eingewogenen Probe an der Gasbürette mit Hilfe einer Natriumbutylat-Lösung). Der Umsatzverlauf ist in Tabelle 2 zusammengefasst. Da auch nach 6 h kein quantitativer Umsatz zu verzeichnen war wurden weitere 38 mg der Katalysatorlösung zugegeben. Nach einer weiteren Rührzeit von 1 h war schließlich der Zielumsatz erreicht und man erhielt eine gelblich, klare Flüssigkeit als Produkt.

### Beispiel 7: Hydrosilylierung des Polyethers aus Beispiel 3.3 an HMTS

Beispiel 7 wurde mit gleicher Stöchiometrie von HMTS zu Polyether aus Beispiel 3.3 analog Beispiel 5 durchgeführt.

### Beispiel 8: Hydrosilylierung des Polyethers aus Beispiel 4.3 an HMTS

Beispiel 8 wurde mit gleicher Stöchiometrie von HMTS zu Polyether aus Beispiel 4.3 analog Beispiel 6 durchgeführt.

**Tabelle 2: Umsatzverlauf der Hydrosilylierung der Polyethergemische aus den Beispielen 1.3, 2.3, 3.3 und 4.3**

| **Beispiel** | **Umsatz [mol-%] nach** | | | | | | |
|---|---|---|---|---|---|---|---|
| | 1h | 2h | 3h | 4h | 5h | 6h | 7h |
| 5 | 64 | 76 | 92 | 98 | > 99 | - | - |
| 6 | 45 | 55 | 63 | n. b. | n. b. | 83 | > 99 |
| 7 | 46 | 71 | 88 | n. b. | 88 | > 99 | |
| 8 | 52 | 72 | 78 | n. b. | 89 | 95 | > 99 |

Überraschenderweise ist festzustellen, dass die erfindungsgemäßen Propenylgruppen-haltigen Polyether im Sinne der SiC-verknüpfenden Hydrosilylierungsreaktion an SiH-funktionelle Siloxane deutlich reaktiver sind als solche Polyether, die dem Stand der Technik entsprechen.

## Patentansprüche

1. Verfahren zur Herstellung hydrosilylierbarer Polyoxyalkylenether, umfassend die Schritte
(1) Alkoxylierung mindestens eines terminal ungesättigten Alkohols mit Alkylenoxiden zu einem Polyoxyalkylenether,
(2) Veretherung des Polyoxyalkylenethers aus Schritt (1) und
(3) Neutralisation des Produktes aus Schritt (2) unter gepufferten Bedingungen.

2. Verfahren gemäß Anspruch 1, **dadurch gekennzeichnet, dass** in Schritt (3) das Produkt aus Schritt (2) vor der Säurezugabe mit einer Pufferlösung versetzt wird.

3. Verfahren gemäß Anspruch 1 oder 2, **dadurch gekennzeichnet, dass** Schritt (3) in Gegenwart von Wasser durchgeführt wird.

4. Verfahren gemäß Anspruch 2 oder 3, **dadurch gekennzeichnet, dass** die Pufferlösung einen Pufferbereich zwischen pH 3,5 und 9,0 aufweist.

5. Verfahren gemäß einem der Ansprüche 2 bis 4, **dadurch gekennzeichnet, dass** die Pufferlösung als Puffersubstanz Phosphat umfasst, vorzugsweise in Form von Hydrogenphosphat und/oder Dihydrogenphosphat.

6. Verfahren gemäß einem der Ansprüche 1 bis 5 zur Herstellung von Gemischen hydrosilylierbarer Polyoxyalkylenether umfassend hydrosilylierbare propylengruppenhaltige Polyoxyalkylenether.

7. Verfahren gemäß einem der Ansprüche 1 bis 6 zur Herstellung hydrosilylierbarer Polyoxyalkylenether-Gemische, umfassend Verbindungen der allgemeinen Formeln (1a) und (1b), 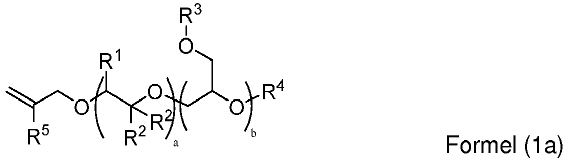 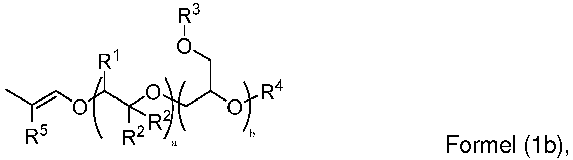 mit
R¹ = unabhängig voneinander ein Wasserstoffradikal oder eine Alkylgruppe mit 1 bis 8 Kohlenstoffatomen, bevorzugt Wasserstoff, Methyl- oder Ethyl-, insbesondere bevorzugt Wasserstoff,
R² = unabhängig voneinander ein Wasserstoffradikal, eine Alkylgruppe mit 1 bis 20 Kohlenstoffatomen, eine Aryl- oder Alkarylgruppe, bevorzugt Wasserstoff, Methyl-, Ethyl-, Octyl-, Decyl-, Dodecyl-, Phenyl-, Benzyl-, besonders bevorzugt Wasserstoff, Methyl- oder Ethyl-, oder
R¹ und einer der Reste R² können gemeinsam einen Ring bilden, der die Atome, an die R¹ und R² gebunden sind, einschließt, bevorzugt enthält dieser Ring 5 bis 8 Kohlenstoffatome,
R³ = unabhängig voneinander ein gesättigter oder ungesättigter, aliphatischer oder aromatischer Kohlenwasserstoffrest mit 2 bis 30 C-Atomen, insbesondere bis 24 C-Atomen, der gegebenenfalls weiter substituiert ist,
R⁴ = unabhängig voneinander ein Wasserstoffradikal, eine Alkylgruppe mit 1 bis 8 Kohlenstoffatomen, die ggf. verzweigt sein kann, und/oder eine ungesättigte aliphatische Gruppe, bevorzugt zu < 10% Wasserstoffradikal, %-Angabe bezogen auf die Gesamtzahl aller betreffenden Moleküle, die den Rest R⁴ enthalten,
R⁵ = Wasserstoff oder Methyl-Gruppe,
wobei
a= 1 bis 1000, bevorzugt 2 bis 500, besonders bevorzugt 3 bis 500, weiter bevorzugt größer 3 bis 100, insbesondere bevorzugt 4 bis 50,
b= 0 bis 1000, bevorzugt 1 bis 500, weiter bevorzugt größer 1 bis 200, insbesondere bevorzugt 0,
mit der Maßgabe, dass die Summe aus a + b größer gleich 3 sein muss und
mit der Maßgabe, dass die Gruppen mit den Indices a + b frei permutierbar über die Molekülkette sind,
und mit der Maßgabe, dass die verschiedenen Monomereinheiten sowohl der Fragmente mit den Indices a als auch b untereinander blockweise aufgebaut sein können, wobei einzelne Blöcke auch mehrfach vorkommen können und untereinander statistisch verteilt sein können, oder aber einer statistischen Verteilung unterliegen und zudem untereinander frei permutierbar, im Sinne von in beliebiger Reihenfolge anzuordnen sind.

8. Hydrosilylierbare Polyoxyalkylenether-Gemische, umfassend Verbindungen der allgemeinen Formeln (1a) und (1b), 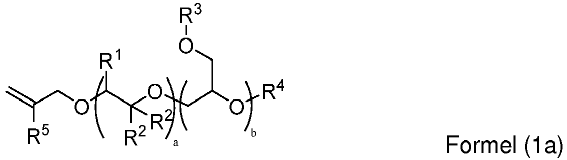 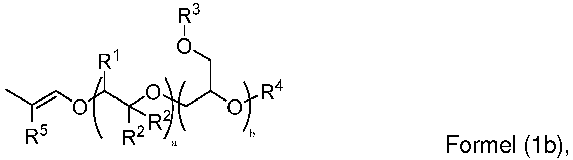 mit
R¹ = unabhängig voneinander ein Wasserstoffradikal oder eine Alkylgruppe mit 1 bis 8 Kohlenstoffatomen, bevorzugt Wasserstoff, Methyl- oder Ethyl-, insbesondere bevorzugt Wasserstoff,
R² = unabhängig voneinander ein Wasserstoffradikal, eine Alkylgruppe mit 1 bis 20 Kohlenstoffatomen, eine Aryl- oder Alkarylgruppe, bevorzugt Wasserstoff, Methyl-, Ethyl-, Octyl-, Decyl-, Dodecyl-, Phenyl-, Benzyl-, besonders bevorzugt Wasserstoff, Methyl- oder Ethyl-, oder
R¹ und einer der Reste R² können gemeinsam einen Ring bilden, der die Atome, an die R¹ und R² gebunden sind, einschließt, bevorzugt enthält dieser Ring 5 bis 8 Kohlenstoffatome,
R³ = unabhängig voneinander ein gesättigter oder ungesättigter, aliphatischer oder aromatischer Kohlenwasserstoffrest mit 2 bis 30 C-Atomen, insbesondere bis 24 C-Atomen, der gegebenenfalls weiter substituiert ist,
R⁴ = unabhängig voneinander ein Wasserstoffradikal, eine Alkylgruppe mit 1 bis 8 Kohlenstoffatomen, die ggf. verzweigt sein kann, und/oder eine ungesättigte aliphatische Gruppe, bevorzugt zu < 10% Wasserstoffradikal, %-Angabe bezogen auf die Gesamtzahl aller betreffenden Moleküle, die den Rest R⁴ enthalten,
R⁵ = Wasserstoff oder Methyl-Gruppe,
wobei
a = 1 bis 1000, bevorzugt 2 bis 500, besonders bevorzugt 3 bis 500, weiter bevorzugt größer 3 bis 100, insbesondere bevorzugt 4 bis 50,
b = 0 bis 1000, bevorzugt 1 bis 500, weiter bevorzugt größer 1 bis 200, insbesondere bevorzugt 0,
mit der Maßgabe, dass die Summe aus a + b größer gleich 3 sein muss und
mit der Maßgabe, dass die Gruppen mit den Indices a + b frei permutierbar über die Molekülkette sind,
und mit der Maßgabe, dass die verschiedenen Monomereinheiten sowohl der Fragmente mit den Indices a als auch b untereinander blockweise aufgebaut sein können, wobei einzelne Blöcke auch mehrfach vorkommen können und untereinander statistisch verteilt sein können, oder aber einer statistischen Verteilung unterliegen und zudem untereinander frei permutierbar, im Sinne von in beliebiger Reihenfolge anzuordnen sind.

9. Hydrosilylierbare Polyoxyalkylenether-Gemische gemäß Anspruch 8, erhältlich nach einem Verfahren gemäß zumindest einem der Ansprüche 1 bis 7.

10. Polyethersiloxane enthaltend hydrosilylierbare Polyoxyalkylenether-Gemische gemäß der Ansprüche 8 bis 9.

11. Verwendung der Polyethersiloxane gemäß Anspruch 10 als grenzflächenaktive Substanz.

12. Verwendung der Polyethersiloxane gemäß Anspruch 10, als Additiv für keramische Formulierungen, als Additiv in Beschichtungsmitteln, polymeren Formmassen oder Thermoplasten, als Nahrungsmittelzusatz, als Netzmittel, als Substratnetzmittel, als Vernetzer, als Verdicker, als Additiv für Polyurethanverbindungen, bei der Herstellung von Farben, Klebstoffen, als Träger von Katalysatoren oder in der biomedizinischen Technik allgemein, oder als Zusatzstoff für kosmetische Formulierungen und Reinigungsmittel.

13. Verwendung von Zusammensetzungen enthaltend Polyethersiloxane gemäß Anspruch 10, als Additiv für keramische Formulierungen, als Additiv in Beschichtungsmitteln, polymeren Formmassen oder Thermoplasten, als Nahrungsmittelzusatz, als Netzmittel, als Substratnetzmittel, als Vernetzer, als Verdicker, als Additiv für Polyurethanverbindungen, bei der Herstellung von Farben, Klebstoffen, als Träger von Katalysatoren oder in der biomedizinischen Technik allgemein, oder als Zusatzstoff für kosmetische Formulierungen und Reinigungsmittel.

## Claims

1. Process for producing hydrosilylable polyoxyalkylene ethers, comprising the steps of
(1) alkoxylation of at least one terminally unsaturated alcohol with alkylene oxides to afford a polyoxyalkylene ether,
(2) etherification of the polyoxyalkylene ether from step (1) and
(3) neutralization of the product from step (2) under buffered conditions.

2. Process according to Claim 1, **characterized in that** in step (3) the product from step (2) is admixed with a buffer solution before the acid addition.

3. Process according to Claim 1 or 2, **characterized in that** step (3) is performed in the presence of water.

4. Process according to Claim 2 or 3, **characterized in that** the buffer solution has a buffering range between pH 3.5 and 9.0.

5. Process according to any of Claims 2 to 4, **characterized in that** the buffer solution comprises phosphate as the buffer substance, preferably in the form of hydrogenphosphate and/or dihydrogenphosphate.

6. Process according to any of Claims 1 to 5 for producing mixtures of hydrosilylable polyoxyalkylene ethers comprising hydrosilylable propylene-containing polyoxyalkylene ethers.

7. Process according to any of Claims 1 to 6 for producing hydrosilylable polyoxyalkylene ether mixtures comprising compounds of general formulae (1a) and (1b), 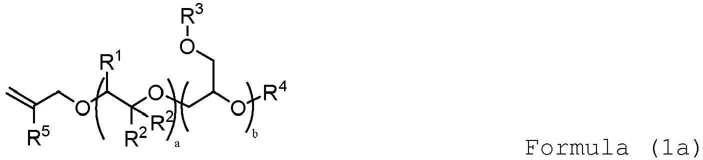 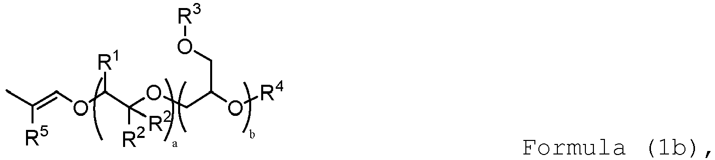 where
R¹ = independently at each occurrence a hydrogen radical or an alkyl group having 1 to 8 carbon atoms, preferably hydrogen, methyl or ethyl, especially preferably hydrogen,
R² = independently at each occurrence a hydrogen radical, an alkyl group having 1 to 20 carbon atoms, an aryl or alkaryl group, preferably hydrogen, methyl, ethyl, octyl, decyl, dodecyl, phenyl, benzyl, particularly preferably hydrogen, methyl or ethyl, or
R¹ and one of the R² radicals may together form a ring which includes the atoms to which R¹ and R² are bonded; this ring preferably comprises 5 to 8 carbon atoms,
R³ = independently at each occurrence a saturated or unsaturated, aliphatic or aromatic, hydrocarbon radical having 2 to 30 carbon atoms, in particular up to 24 carbon atoms, which is optionally further substituted,
R⁴ = independently at each occurrence a hydrogen radical, an alkyl group having 1 to 8 carbon atoms, which may optionally be branched, and/or an unsaturated aliphatic group, preferably < 10% hydrogen radical, reported % based on the entirety of all relevant molecules containing the R⁴ radical,
R⁵ = hydrogen or methyl group,
wherein
a = 1 to 1000, preferably 2 to 500, particularly preferably 3 to 500, more preferably greater than 3 to 100, especially preferably 4 to 50,
b = 0 to 1000, preferably 1 to 500, more preferably greater than 1 to 200, especially preferably 0,
with the proviso that the sum of a + b must be not less than 3 and
with the proviso that the groups having the indices a + b are freely permutable over the molecular chain,
and with the proviso that the different monomer units of the fragments with the indices a and b may be in a blockwise structure with one another, wherein individual blocks may also occur multiple times and may be randomly distributed among one another or else are subject to a random distribution and further are freely permutable with one another in the sense that they may be arranged in any desired sequence.

8. Hydrosilylable polyoxyalkylene ether mixtures comprising compounds of general formulae (1a) and (1b), 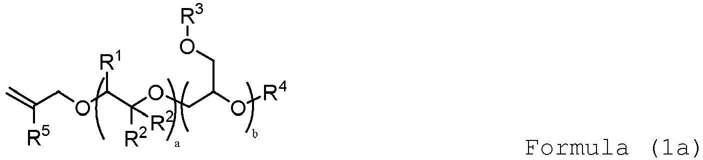 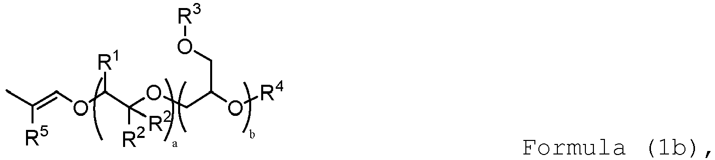 where
R¹ = independently at each occurrence a hydrogen radical or an alkyl group having 1 to 8 carbon atoms, preferably hydrogen, methyl or ethyl, especially preferably hydrogen,
R² = independently at each occurrence a hydrogen radical, an alkyl group having 1 to 20 carbon atoms, an aryl or alkaryl group, preferably hydrogen, methyl, ethyl, octyl, decyl, dodecyl, phenyl, benzyl, particularly preferably hydrogen, methyl or ethyl, or
R¹ and one of the R² radicals may together form a ring which includes the atoms to which R¹ and R² are bonded; this ring preferably comprises 5 to 8 carbon atoms,
R³ = independently at each occurrence a saturated or unsaturated, aliphatic or aromatic, hydrocarbon radical having 2 to 30 carbon atoms, in particular up to 24 carbon atoms, which is optionally further substituted,
R⁴ = independently at each occurrence a hydrogen radical, an alkyl group having 1 to 8 carbon atoms, which may optionally be branched, and/or an unsaturated aliphatic group, preferably < 10% hydrogen radical, reported % based on the entirety of all relevant molecules containing the R⁴ radical,
R⁵ = hydrogen or methyl group,
wherein
a = 1 to 1000, preferably 2 to 500, particularly preferably 3 to 500, more preferably greater than 3 to 100, especially preferably 4 to 50,
b = 0 to 1000, preferably 1 to 500, more preferably greater than 1 to 200, especially preferably 0,
with the proviso that the sum of a + b must be not less than 3 and
with the proviso that the groups having the indices a + b are freely permutable over the molecular chain,
and with the proviso that the different monomer units of the fragments with the indices a and b may be in a blockwise structure with one another, wherein individual blocks may also occur multiple times and may be randomly distributed among one another or else are subject to a random distribution and further are freely permutable with one another in the sense that they may be arranged in any desired sequence.

9. Hydrosilylable polyoxyalkylene ether mixtures according to Claim 8, obtainable by a process according to at least one of Claims 1 to 7.

10. Polyether siloxanes containing hydrosilylable polyoxyalkylene ether mixtures according to Claims 8 to 9.

11. Use of the polyether siloxanes according to Claim 10 as a surface-active substance.

12. Use of the polyether siloxanes according to Claim 10 as an additive for ceramic formulations, as an additive in coating compositions, polymeric moulding materials or thermoplastics, as a feed additive, as a wetting agent, as a substrate wetting agent, as a crosslinker, as a thickener, as an additive for polyurethane compounds, in the production of paints, adhesives, as a support for catalysts or in biomedical technology generally or as an added substance for cosmetic formulations and cleaning compositions.

13. Use of compositions containing polyether siloxanes according to Claim 10 as an additive for ceramic formulations, as an additive in coating compositions, polymeric molding materials or thermoplastics, as a feed additive, as a wetting agent, as a substrate wetting agent, as a crosslinker, as a thickener, as an additive for polyurethane compounds, in the production of paints, adhesives, as a support for catalysts or in biomedical technology generally or as an added substance for cosmetic formulations and cleaning compositions.

## Revendications

1. Procédé de fabrication d'éthers de polyoxyalkylène hydrosilylables, comprenant les étapes suivantes:
(1) l'alcoxylation d'au moins un alcool insaturé en position terminale avec des oxydes d'alkylène pour former un éther de polyoxyalkylène,
(2) l'éthérification de l'éther de polyoxyalkylène de l'étape (1), et
(3) la neutralisation du produit de l'étape (2) dans des conditions tamponnées.

2. Procédé selon la revendication 1, **caractérisé en ce qu'**à l'étape (3), le produit de l'étape (2) est mélangé avec une solution de tampon avant l'ajout d'un acide.

3. Procédé selon la revendication 1 ou 2, **caractérisé en ce que** l'étape (3) est réalisée en présence d'eau.

4. Procédé selon la revendication 2 ou 3, **caractérisé en ce que** la solution de tampon présente une plage de tamponnage comprise entre pH 3,5 et 9,0.

5. Procédé selon l'une quelconque des revendications 2 à 4, **caractérisé en ce que** la solution de tampon comprend un phosphate en tant que substance tampon, de préférence sous la forme d'un hydrogénophosphate et/ou d'un dihydrogénophosphate.

6. Procédé selon l'une quelconque des revendications 1 à 5, pour la fabrication de mélanges d'éthers de polyoxyalkylène hydrosilylables comprenant des éthers de polyoxyalkylène hydrosilylables contenant des groupes propylène.

7. Procédé selon l'une quelconque des revendications 1 à 6, pour la fabrication de mélanges d'éthers de polyoxyalkylène hydrosilylables comprenant des composés des formules générales (1a) et (1b) : 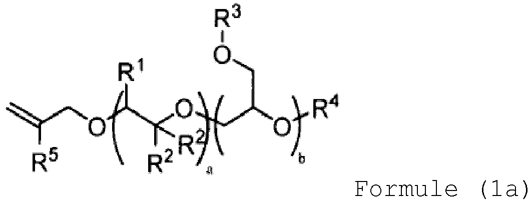 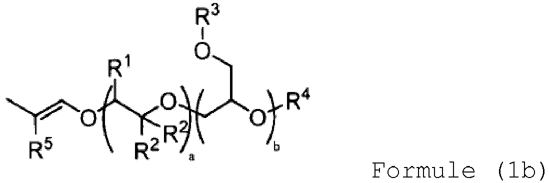 dans lesquelles
R¹ = indépendamment les uns des autres, un radical hydrogène ou un groupe alkyle de 1 à 8 atomes de carbone, de préférence hydrogène, méthyle ou éthyle, de manière particulièrement préférée hydrogène,
R² = indépendamment les uns des autres, un radical hydrogène, un groupe alkyle de 1 à 20 atomes de carbone, un groupe aryle ou alkaryle, de préférence hydrogène, méthyle, éthyle, octyle, décyle, dodécyle, phényle, benzyle, de manière particulièrement préférée hydrogène, méthyle ou éthyle, ou
R¹ et un des radicaux R² peuvent former ensemble un cycle, qui comprend les atomes auxquels R¹ et R² sont reliés, ce cycle contenant de préférence 5 à 8 atomes de carbone,
R³ = indépendamment les uns des autres un radical hydrocarboné saturé ou insaturé, aliphatique ou aromatique, de 2 à 30 atomes C, notamment de jusqu'à 24 atomes C, qui est éventuellement davantage substitué,
R⁴ = indépendamment les uns des autres, un radical hydrogène, un groupe alkyle de 1 à 8 atomes de carbone, qui peut éventuellement être ramifié, et/ou un groupe aliphatique insaturé, de préférence < 10 % de radical hydrogène, la donnée de % se rapportant au nombre total de toutes les molécules en question qui contiennent le radical R⁴,
R⁵ = hydrogène ou groupe méthyle,
avec
a = 1 à 1 000, de préférence 2 à 500, de manière particulièrement préférée 3 à 500, de manière davantage préférée plus de 3 à 100, de manière particulièrement préférée 4 à 50,
b = 0 à 1 000, de préférence 1 à 500, de manière davantage préférée plus de 1 à 200, de manière particulièrement préférée 0,
à condition que la somme de a+b soit supérieure ou égale à 3, et
à condition que les groupes munis des indices a+b puissent être librement permutés dans la chaîne moléculaire,
et à condition que les différentes unités monomères aussi bien des fragments munis de l'indice a que b puissent être assemblées entre elles séquentiellement, des séquences individuelles pouvant également être présentes à plusieurs reprises et pouvant être distribuées statistiquement les unes parmi les autres, ou soient soumises à une distribution statistique et puissent en outre être librement permutées les unes avec les autres, au sens d'un agencement dans un ordre quelconque.

8. Mélanges d'éthers de polyoxyalkylène hydrosilylables, comprenant des composés des formules générales (1a) et (1b) : 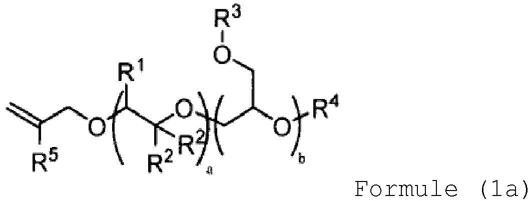 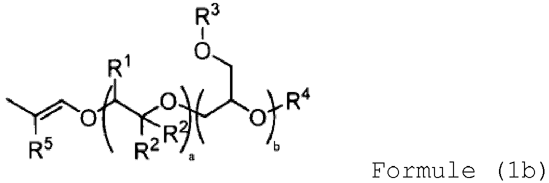 dans lesquelles
R¹ = indépendamment les uns des autres, un radical hydrogène ou un groupe alkyle de 1 à 8 atomes de carbone, de préférence hydrogène, méthyle ou éthyle, de manière particulièrement préférée hydrogène,
R² = indépendamment les uns des autres, un radical hydrogène, un groupe alkyle de 1 à 20 atomes de carbone, un groupe aryle ou alkaryle, de préférence hydrogène, méthyle, éthyle, octyle, décyle, dodécyle, phényle, benzyle, de manière particulièrement préférée hydrogène, méthyle ou éthyle, ou
R¹ et un des radicaux R² peuvent former ensemble un cycle, qui comprend les atomes auxquels R¹ et R² sont reliés, ce cycle contenant de préférence 5 à 8 atomes de carbone,
R³ = indépendamment les uns des autres, un radical hydrocarboné saturé ou insaturé, aliphatique ou aromatique, de 2 à 30 atomes C, notamment de jusqu'à 24 atomes C, qui est éventuellement davantage substitué,
R⁴ = indépendamment les uns des autres, un radical hydrogène, un groupe alkyle de 1 à 8 atomes de carbone, qui peut éventuellement être ramifié, et/ou un groupe aliphatique insaturé, de préférence < 10 % de radical hydrogène, la donnée de % se rapportant au nombre total de toutes les molécules en question qui contiennent le radical R⁴,
R⁵ = hydrogène ou groupe méthyle,
avec
a = 1 à 1 000, de préférence 2 à 500, de manière particulièrement préférée 3 à 500, de manière davantage préférée plus de 3 à 100, de manière particulièrement préférée 4 à 50,
b = 0 à 1 000, de préférence 1 à 500, de manière davantage préférée plus de 1 à 200, de manière particulièrement préférée 0,
à condition que la somme de a+b soit supérieure ou égale à 3, et
à condition que les groupes munis des indices a+b puissent être librement permutés dans la chaîne moléculaire,
et à condition que les différentes unités monomères aussi bien des fragments munis de l'indice a que b puissent être assemblées entre elles séquentiellement, des séquences individuelles pouvant également être présentes à plusieurs reprises et pouvant être distribuées statistiquement les unes parmi les autres, ou soient soumises à une distribution statistique et puissent en outre être librement permutées les unes avec les autres, au sens d'un agencement dans un ordre quelconque.

9. Mélanges d'éthers de polyoxyalkylène hydrosilylables selon la revendication 8, pouvant être obtenus par un procédé selon au moins l'une quelconque des revendications 1 à 7.

10. Polyéthersiloxanes contenant des mélanges d'éthers de polyoxyalkylène hydrosilylables selon les revendications 8 à 9.

11. Utilisation des polyéthersiloxanes selon la revendication 10 en tant que substance tensioactive.

12. Utilisation des polyéthersiloxanes selon la revendication 10 en tant qu'additif pour des formulations céramiques, en tant qu'additif dans des agents de revêtement, des matériaux de moulage polymères ou des thermoplastiques, en tant qu'additif de produits alimentaires, en tant qu'agent mouillant, en tant qu'agent mouillant de substrats, en tant qu'agent de réticulation, en tant qu'épaississant, en tant qu'additif pour des composés de polyuréthane, lors de la fabrication de peintures, d'adhésifs, en tant que supports de catalyseurs ou dans la technologie biomédicale de manière générale, ou en tant qu'additif pour des formulations cosmétiques et des détergents.

13. Utilisation de compositions contenant des polyéthersiloxanes selon la revendication 10 en tant qu'additif pour des formulations céramiques, en tant qu'additif dans des agents de revêtement, des matériaux de moulage polymères ou des thermoplastiques, en tant qu'additif de produits alimentaires, en tant qu'agent mouillant, en tant qu'agent mouillant de substrats, en tant qu'agent de réticulation, en tant qu'épaississant, en tant qu'additif pour des composés de polyuréthane, lors de la fabrication de peintures, d'adhésifs, en tant que supports de catalyseurs ou dans la technologie biomédicale de manière générale, ou en tant qu'additif pour des formulations cosmétiques et des détergents.
